# EUROPÄISCHE PATENTSCHRIFT

(11) **EP 3 582 575 B1**
(45) Veröffentlichungstag und Bekanntmachung des Hinweises auf die Patenterteilung: **27.07.2022**
(21) Anmeldenummer: 19190681.7
(22) Anmeldetag: 22.11.2017
(51) Int. Cl.: H04W 74/08, H04W 84/18

(54) **VERFAHREN MIT DYNAMISCHER RESERVIERUNG VON ÜBERTRAGUNGSKAPAZITÄT**
METHOD WITH DYNAMIC RESERVATION OF TRANSMISSION CAPACITY
PROCÉDÉ À RÉSERVATION DYNAMIQUE DE LA CAPACITÉ DE TRANSMISSION

(43) Veröffentlichungstag der Anmeldung: 18.12.2019
(62) Teilanmeldung aus: 17202949.8
(73) Patentinhaber: Rohde & Schwarz GmbH & Co. KG, 81671 München (DE)
(72) Erfinder: BOTT, Rainer, 82346 Andechs (DE)
(74) Vertreter: Rupp, Christian

(56) Entgegenhaltungen:
- EP-A2- 2 209 346
- DE-A1-102007 051 605
- LAL D ET AL: "Throughput enhancement in wireless ad hoc networks with spatial channels - a MAC layer perspective", COMPUTERS AND COMMUNICATIONS, 2002. PROCEEDINGS. ISCC 2002. SEVENTH IN TERNATIONAL SYMPOSIUM ON JULY 1-4, 2002, PISCATAWAY, NJ, USA,IEEE, 1. Juli 2002 (2002-07-01), Seiten 421-428, XP010595796, ISBN: 978-0-7695-1671-4

## Beschreibung

Die Erfindung betrifft ein Verfahren zur dezentralen Reservierung von Übertragungskapazität, insbesondere für ein Kommunikationsnetzwerk ohne Netzwerk-Master mit zumindest zwei Netzwerkknoten mit je einer Sende/Empfangsantenne.

Die kabellose Datenübertragung über Funknetzwerke, bevorzugt mittels Ad-Hoc Netzwerken hat in den letzten Jahren immer mehr an Bedeutung gewonnen.

Vorteilhafterweise benötigen solche Ad-Hoc Netzwerke keine feste Infrastruktur, wie Router oder Basisstationen. Daher ist ein solches Netzwerk nicht nur zur Unterstützung von Einsatzkräften, z.B. nach Naturkatastrophen sehr hilfreich, sondern auch in Bereichen, für die ein Client-Server basiertes Netzwerk zu kostspielig oder nicht realisierbar ist. Solche Ad-Hoc Netzwerke können mit omnidirektionalen oder gerichteten Antennen realisiert werden.

Bei der gerichteten, auch direktionale Funkübertragung genannt, werden zu übertragende Signale lediglich in eine bestimmte Richtung gesendet bzw. können gerichtete Antennen auch nur Signale aus einer bestimmten Richtung empfangen. Eine omnidirektionale Antenne sendet zu übertragende Daten in alle Richtungen bzw. empfängt Signale auch aus allen Richtungen. Gerichtete Antennen werden in der Funkkommunikation verwendet, um bei gegebener Reichweite eine größere Datenrate zu erzielen oder um bei gegebener Datenrate eine höhere Reichweite zu erzielen. In Funknetzwerken kann durch die Verwendung gerichteter Antennen ein höherer Datendurchsatz erreicht werden, da durch das erreichbare spatial diversity parallel mehrere Kommunikationen zwischen zwei Netzwerkknoten möglich sind.

Gerade für solche Kommunikationsnetzwerke ohne Netzwerk-Master ist eine eigenständige Kontrolle und Koordination durch die einzelnen Netzwerkknoten erforderlich, um zu vermeiden, dass gesendete Informationen verloren gehen. In solchen Netzwerken ohne Netzwerk-Master treten unter anderem Probleme wie das Taubheitsproblem (deafness problem) und das versteckte Knoten Problem (hidden node problem) auf.

Eine Lösung bezüglich des versteckten Knoten Problems (hidden terminal problem) ist beispielsweise in der DE 10 2006 014 308 A1 genannt. Dort wird ein Verfahren zur Multi-Hop-Datenübertragung in einem ad-hoc-Netz mit versteckten Knoten beschrieben. Bei der DE 10 2006 014 308 A1 besteht ein mobiles ad-hoc-Netz aus einer Menge von Funkgeräten, wobei jedes Funkgerät als Router für die jeweils anderen Funkgeräte dient und somit keine zentrale Infrastruktur benötigt. In dem beschriebenen Verfahren ermittelt ein Knoten mit Sendeabsicht die Wahrscheinlichkeit für eine kollisionsfreie Datenübertragung zum nächsten Knoten und überträgt bei einer hohen Wahrscheinlichkeit für eine solche kollisionsfreie Datenübertragung ein Nutzdaten-Paket zum nächsten Knoten, ohne sich über den nächsten Knoten mit in der Umgebung des nächsten Knotens befindlichen versteckten Knoten bezüglich der Datenübertragung zum nächsten Knoten abzustimmen. Ein Medium-Access-Control (MAC)-Protokoll koordiniert den Zugriff auf die einzelnen Knoten und definiert, wie die begrenzte Übertragungsressource effizient und fair zwischen den einzeln Knoten (Funkgeräten) verteilt werden kann.

Die EP 2 209 346 A2 betrifft ein Verfahren zur Datenübertragung in einem lokalen Netzwerk, beispielsweise einem WLAN-Netzwerk oder einem Personal Area Network, wobei Daten innerhalb aufeinanderfolgender Zeitrahmen zwischen mehreren ersten Knoten auf der MAC-Schicht übertragen werden.

Die DE 10 2007 051 605 A1 betrifft ein Funkkommunikationssystem umfassend ein Koordinatorgerät und mindestens ein Kommunikationsendgerät, in dem der Zugriff auf die Funkressource nach dem Zeitmultiplexverfahren strukturiert ist. Die Funkressource ist in determinierte Zeitrahmen unterteilt, wobei das Koordinatorgerät dem mindestens einen Kommunikationsendgerät mindestens einen Nutzdatenübertragungszeitschlitz zuweist, dessen zeitliche Position in aufeinanderfolgenden Zeitrahmen in Bezug auf den Beginn des jeweiligen Zeitrahmens determiniert ist. Die einzelnen Zeitrahmen sind so strukturiert, dass sie einen Synchronisierungszeitschlitz, ein oder mehrere Nutzdatenübertragungszeitschlitze gleicher Länge und einen weiteren dynamischen Zeitschlitz beinhalten.

Der Erfindung liegt die Aufgabe zugrunde, ein Verfahren zur dezentralen Reservierung von Übertragungskapazität, insbesondere für ein Kommunikationsnetzwerk ohne Netzwerk-Master mit mindestens zwei Netzwerkknoten mit je einer Sende/Empfangs-Antenne, zu schaffen. Ganz allgemein soll also eine kollisionsfreie Datenübertragung in einem dezentralen Funknetzwerk mit omnidirektionalen bzw. gerichteten Antennen realisiert werden.

Die Erfindung wird durch die Merkmale des Anspruchs 1 gelöst. Die davon abhängigen Ansprüche enthalten vorteilhafte Weiterbildungen der Erfindung.

Der Erfindung liegt die Erkenntnis zugrunde, eine kollisionsfreie Datenübertragung zwischen zumindest zwei Netzwerkknoten mit je einer Sende/Empfangs-Antenne zu schaffen, indem zumindest ein Netzwerkknoten eine Reservierungsfunktionalität aufweist, um bei dem zum Empfang eines Nutzdatenpakets bestimmten Netzwerkknoten zumindest einen Zeitschlitz für die Übertragung des gewünschten Nutzdatenpakets zu reservieren.

Es wird somit vermieden, dass ein Netzwerkknoten versucht mit einem Netzwerkknoten zu kommunizieren, der bereits mit einem anderen Netzwerkknoten Daten austauscht (Taubheitsproblem). Des Weiteren wird verhindert, dass eine Kommunikation zwischen zwei Netzwerkknoten aufgebaut wird, die eine bereits bestehende Kommunikation zwischen zwei anderen Netzwerkknoten stören würde oder dass zwei Netzwerkknoten gleichzeitig senden, weil diese aufgrund begrenzter Reichweite nichts voneinander wissen (verstecktes Knoten Problem).

Bevorzugt basiert die Reservierungsfunktionalität auf in einem Datenrahmen definierten Datenpaketen, wobei der Datenrahmen einen so genannten Request To Send Block (zu Deutsch: Anfrage zum Senden), auch RTS Block genannt, aufweist, der RTS Datenpakete beinhaltet, und einen sogenannten Clear To Send Block (zu Deutsch: Klar zum Senden), auch CTS Block genannt, aufweist, der CTS Datenpakete beinhaltet. Zunächst wird mittels RTS Datenpaketen eine Reservierungsanfrage von einem Netzwerkknoten, der Daten versenden möchte, in diesem Fall Sender genannt, an einen zu empfangenden Netzwerkknoten, in diesem Fall Empfänger genannt, gesendet. Diese RTS Datenpakete werden aber auch von allen anderen Netzwerkknoten empfangen. Als Antwort auf die Reservierungsanfrage mittels RTS Datenpaketen, erhält der Sender ein Clear To Send (CTS) Datenpaket oder ein not Clear To Send (zu Deutsch: nicht klar zum Senden), auch nCTS Datenpaket genannt. Mittels dieser CTS bzw. nCTS Datenpakete kann jeder Netzwerkknoten, dem das zumindest eine RTS Datenpaket sendenden Netzwerkknoten, also kurz dem Sender signalisieren, ob er in der Lage ist, den Sender zu empfangen bzw. ob der Sender seinen eigenen Empfang stört.

Vorteilhafterweise erlauben die RTS und CTS bzw. nCTS Datenpakete bevorzugt eine Koordination der Datenübertragung innerhalb des Kommunikationssetzwerkes, da die verschiedenen Netzwerkknoten mittels Reservierungsanfrage und entsprechender Rückmeldung den Datenfluss kontrollieren können. Anhand der CTS bzw. nCTS Rückmeldungen kann jeder Sender entscheiden, ob er an einen bestimmten Empfänger senden kann, ohne den Empfang bei anderen Sendern zu blockieren.

Bevorzugt wird mittels einem RTS Datenpaket zumindest eines Netzwerkknotens die Reservierung auch mehrerer Zeitschlitze innerhalb eines Rahmens angefragt.

Vorteilhafterweise kann auch über einen Zeitschlitz hinaus Kapazität beim Empfänger bevorzugt angefragt werden. Diese dynamische Reservierung in Abhängigkeit von den zu sendenden Nutzdaten erhöht die Flexibilität bei der Datenübertragung. Zumindest eines der RTS Datenpakete kann auch Informationen über die Datenmenge enthalten, die übertragen werden soll und/oder die Information, dass zu bereits reservierten Zeitschlitzen zusätzliche Zeitschlitze reserviert werden sollen.

Bevorzugt folgt auf ein RTS Datenpaket vom Sender ein CTS Datenpaket vom angefragten Empfänger, sofern Zeitschlitzte für eine Datenübertragung verfügbar sind. Wenn hingegen der Empfänger keine Reservierung von Zeitschlitzen annehmen kann, da die Zeitschlitze bereits von anderen Netzwerkknoten reserviert wurden, folgt auf ein RTS Datenpaket vom Sender ein nCTS Datenpaket. Zumindest eines der nCTS Datenpakete kann Informationen darüber erhalten wie lange die Zeitschlitze belegt sind und/oder auch wann eine erneute Reservierungsanfrage gestellt werden soll. Des Weiteren ist es auch denkbar, dass das nCTS Datenpaket Positionsdaten für den anfragenden Sender beinhaltet, die dem Sender eine Position vorgeben, die eine Reservierung von Zeitschlitzen ermöglicht und somit zum Erhalt eines CTS Datenpakets führt.

Bevorzugt signalisiert ein CTS Datenpaket, dass innerhalb eines Rahmens mehr als ein Zeitschlitz reserviert werden kann bis das nächste RTS Datenpaket empfangen wird und mit einem CTS Datenpaket beantwortet wird.

Auch wenn mittels RTS Datenpaket beispielsweise nur ein oder eine definierte Anzahl von Zeitschlitzen angefragt wurde, umfasst vorteilhafterweise zumindest eines der CTS Datenpakete bevorzugt Informationen über die mögliche reservierbare Anzahl von Zeitschlitzen bis zu einem definierten Zeitpunkt, nämlich bis ein RTS Datenpaket empfangen wird und mit einem CTS Datenpaket beantwortet wird. Somit kann der Sender an diesen Netzwerkknoten so lange Daten senden bis dieser Netzwerkknoten ein RTS Datenpaket erhält und mit CTS beantwortet. Somit wird die Datenkommunikation optimiert, da so lange Daten an einen Netzwerkknoten gesendet werden können, bis dieser Netzwerkknoten anderweitig belegt ist. Diese zusätzliche Information innerhalb der CTS Datenpakete erhöht weiter die Flexibilität, da nicht nur auf die Reservierungsanfrage eingegangen wird, sondern auch zusätzliche Informationen über eine mögliche höhere Kapazität als jene die angefragt wurde, gegeben wird.

Bevorzugt weist zumindest ein Netzwerkknoten eine strahlformende Funktionalität auf und die zu diesem Netzwerkknoten gehörige Antenne sendet bevorzugt einen gerichteten elektromagnetischen Strahl bzw. eine gerichtete elektromagnetische Welle aus.

Vorteilhafterweise, kann die Sendekeule des elektromagnetischen Strahls bevorzugt sehr schnell umgeschaltet werden und somit kann ein gerichteter Strahl in beliebige Richtungen gesendet werden.

Bevorzugt ist die Antenne ist auch in der Lage, elektromagnetische Strahlen aus verschiedenen Richtungen zu empfangen, sich also in verschiedene Richtungen auszurichten bzw. zu fokussieren.

Vorteilhafterweise, kann auch die Strahlschwenkung mittels Strahlformung im Empfangsfall bevorzugt sehr rasch erfolgen. Es ist auch denkbar, Antennen mit mechanischer Richtwirkung für die Kommunikation zwischen den einzelnen Knoten zu verwenden. Allerdings sind dann mehrere solcher Antennen nötig und es sollte durch Umschaltung zwischen den einzelnen Antennen möglich sein, die notwendige räumliche Abdeckung zu erreichen. Des Weiteren ist es vorteilhaft, wenn durch die Verwendung gerichteter Antennen bei gegebener Reichweite eine größere Datenrate zu erzielen ist bzw. dass mittels gerichteter Antenne bei gegebener Datenrate eine höhere Reichweite zu erzielen ist. Ein weiterer Vorteil der gerichteten Antennen ist eine Erhöhung der Energieeffizienz und die Erhöhung der Widerstandsfähigkeit gegen Interferenzen und Störungen. Auch werden Parameter wie LPI (Low Probability of Intercept, zu Deutsch: geringe Abfangwahrscheinlichkeit) und LPD (Low Probability of Detection, zu Deutsch: geringe Nachweiswahrscheinlichkeit), welche vor allem in der Nachrichtenübertragung in Krisengebieten eine wichtige Rolle spielen, verbessert und auch die Aufklärbarkeit wird durch die Verwendung gerichteter Sende und/oder Empfangsantennen minimiert.

Bevorzugt sind die einzelnen Netzwerkknoten zeitlich synchronisiert und/oder die Position der einzelnen Netzwerkknoten ist bekannt.

Bevorzugt ist das zumindest eine Nutzdatenpaket in mehr als einen Zeitschlitz unterteilt.

Bevorzugt sendet ein Netzwerkknoten Datenpakete an einen gewünschten Empfänger, auch wenn der Netzwerkknoten ein nCTS Datenpaket erhalten hat. Dies ist der Fall, wenn die zu sendenden Daten eine hohe Priorität haben und die Datenpakete daher beispielsweise mit Quality-of-Service (QoS) Informationen (zu Deutsch: Dienstgüte Informationen), gekennzeichnet sind.

Sind QoS-Informationen in den RTS und/oder CTS bzw. nCTS Datenpaketen enthalten, können Sender bzw. Empfänger vorteilhafterweise entscheiden, ob höher priorisierte Daten bevorzugt werden oder nicht.

Bevorzugt stellt ein Netzwerkknoten innerhalb eines Zeitschlitzes gleichzeitig bei mehreren Netzwerkknoten eine Reservierungsanfrage, indem innerhalb eines Zeitschlitzes RTS Datenpakte an mehrere Netzwerkknoten gesendet werden.

Bevorzugte Ausführungsbeispiele der Erfindung werden nachfolgend unter Bezugnahme auf die Zeichnung lediglich beispielhaft beschrieben. In der Zeichnung zeigt:
- Fig. 1: ein Beispiel für das Taubheitsproblem (deafness) Problem in einem Kommunikationsnetzwerk mit drei Netzwerkknoten;
- Fig. 2: ein Ausführungsbeispiel für den erfindungsgemäßen Datenrahmen, mit dem der Netzwerkknoten die jeweilige Reservierungsfunktionalität erreicht;
- Fig. 3: ein Beispiel für die Vermeidung einer Störung einer laufenden Übertragung verursacht durch die Hauptkeule eines weiteren sendenden Netzwerkknotens und
- Fig. 4: ein Beispiel für die Vermeidung einer Störung einer laufenden Übertragung verursacht durch die Nebenkeule eines weiteren sendenden Netzwerkknotens.

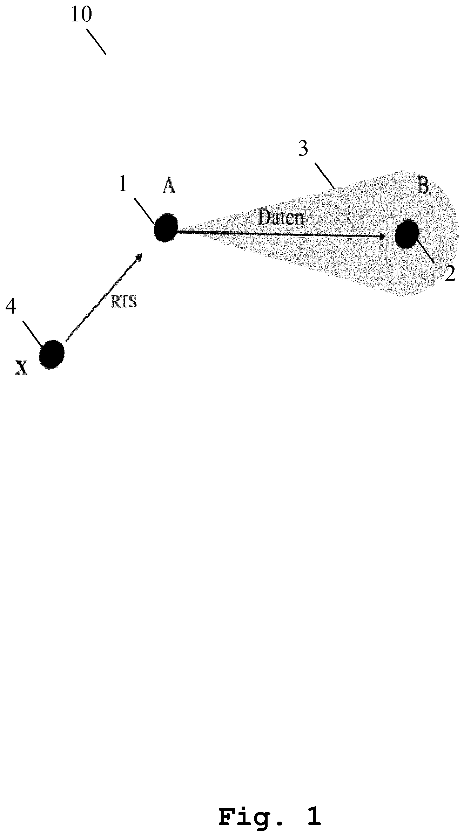

Fig. 1 zeigt eine Darstellung des so genannten Taubheitsproblems (deafness problem), das vor allem in gerichteten Kommunikationsnetzwerken auftritt. Gerichtetes Kommunikationsnetzwerk bedeutet in diesem Kontext, dass die Sendeantenne einen gerichteten elektromagnetischen Strahl aussendet, und dass die Empfangsantenne sich auf den Empfang eines elektromagnetischen Strahls aus einer bestimmten Richtung fokussieren kann. Taubheit in gerichteten Netzten tritt beispielsweise dann auf, wenn ein Netzwerkknoten X (4), der senden möchte, auch Sender genannt, mit einem anderen Netzwerkknoten A (1) kommunizieren möchte, dieser Netzwerkknoten A (1) aber seine Strahlungskeule (3) bereits auf einen anderen Netzwerkknoten B (2) ausgerichtet hat.

In der Darstellung gemäße Fig. 1 kommuniziert Netzwerkknoten A (1) mit Netzwerkknoten B (2), wobei aber Netzwerkknoten X (4) ebenfalls eine Kommunikation mit Netzwerkknoten A (1) beginnen möchte. Da Netzwerkknoten X (4) keine Kenntnis davon hat, dass der Netzwerkknoten A (1) seine Keule (3) auf Netzwerkknoten B (2) ausgerichtet hat, wodurch keine Kommunikation zwischen Netzwerkknoten X (4) und Netzwerkknoten A (1) möglich ist, versucht der Netzwerkknoten X (4) immer wieder mit dem Netzwerkknoten A (1) eine Verbindung durch das wiederholende Senden eines Request To Send (RTS) Datenpakets (zu Deutsch: Anfrage zum Senden) aufzubauen. Somit verschwendet der Netzwerkknoten X (4) Übertragungskapazitäten. Des Weiteren kann der Netzwerkknoten X (4) annehmen, dass Netzwerkknoten A (1) außerhalb seiner Sendereichweite liegt, da keinerlei Rückmeldung auf die RTS Datenpakte erfolgt. Die Darstellung in Fig. 1 soll die Notwendigkeit darlegen, dass jeder Netzwerkknoten zu definierten Zeitpunkten sendet bzw. empfängt, um Störungen und Datenkollisionen im Kommunikationsnetzwerk zu vermeiden.

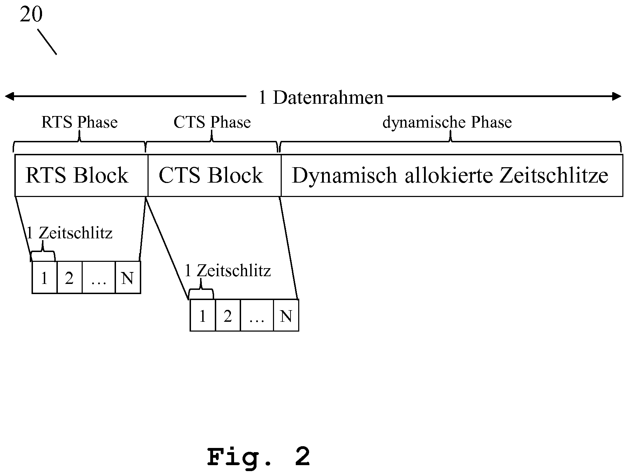

Fig. 2 zeigt den erfindungsgemäßen Datenrahmen (20) für eine Medien-Zugriffssteuerung (Medium Access Control auch MAC abgekürzt) basierend auf einem TDMA-Schema für ein Kommunikationsnetzwerk bzw. Funknetzwerk.

Der genannte Datenrahmen bzw. Frame (20) ist beispielsweise 1 Sekunde lang. Alle festen Allokierungen von Zeitschlitzen, auch Slots genannt wiederholen sich auf dieser Frame Basis. Ein Frame beinhaltet eine bestimmte Anzahl von Slots, wobei innerhalb eines Slots auch nur ein Teilnehmer, also ein Netzwerkknoten des Kommunikationsnetzwerks, sendet. Die Größe der Slots ist abhängig von der gewünschten bzw. geforderten Datenrate aber auch vom Typ des Kommunikationsnetzwerkes. Typische Slotlängen betragen 1-10ms. In den Slotlängen müssen auch notwendige Guard-Intervalle für den Laufzeitausgleich der Funkübertragung berücksichtigt werden. Für den Flugfunk betragen solche Laufzeitunterschiede beispielsweise bis zu 1,34ms.

Das erfindungsgemäße Schema (20) soll Datenkollisionen in einem Funknetzwerk reduzieren und auch Probleme wie beispielsweise das Taubheitsproblem vermeiden. Für ein Kommunikationsnetzwerk mit ausschließlich gerichteten Sende und Empfangsantennen wird angenommen, dass jeder Netzwerkknoten die Position der anderen Netzwerkknoten kennt und daher seine Antenne sowohl für das Senden als auch für das Empfangen entsprechend ausrichten kann. Ein sendender Netzwerkknoten wird in weiterer Folge auch Sender genannt, ein empfangender Netzwerkknoten wird in weiterer Folge auch Empfänger genannt.

Der erfindungsgemäße Datenrahmen (20), beinhaltet einen sogenannten RTS Block, wobei RTS für Request To Send steht (zu Deutsch: Anfrage zum Senden). Im RTS Block des zumindest einen Datenrahmens (20) des jeweiligen Netzwerkknotens, der an einen anderen oder auch mehrere andere Netzwerkknoten Nutzdaten senden möchte, sind bevorzugt sowohl die RTS Datenpaketinformationen mit den Reservierungsanfragen des jeweiligen Netzwerkknotens an die gewünschten Empfänger der Nutzdaten abgelegt, als auch die von anderen Netzwerkknoten empfangenen RTS Datenpaketinformationen mit deren Reservierungsanfragen. An den RTS Block schließt der CTS Block an, wobei CTS für Clear To Send steht (zu Deutsch: Klar zum Senden).

Innerhalb des CTS Blocks befinden sich bevorzugt auch die nCTS Datenpaketinformationen. Im CTS Block des Datenrahmens (20) des jeweiligen Netzwerkknotens, der an einen anderen oder auch an mehrere andere Netzwerkknoten Nutzdaten senden möchte, sind bevorzugt sowohl die empfangenen CTS Datenpaketinformationen bzw. nCTS Datenpaketinformationen der anderen Netzwerkknoten, welche die Nutzdaten erhalten sollen, als Antwort auf die Reservierungsanfragen abgelegt. Es sind aber auch die gesendeten CTS Datenpaketinformationen bzw. nCTS Datenpaketinformationen, die als Antwort auf die Reservierungsanfragen aller anderen Sender gesendet wurden, abgelegt.

Mittels des RTS Blocks kann jeder Netzwerkknoten bzw. jeder Sender im für ihn reservierten RTS Zeitschlitz mittels RTS Datenpakten Reservierungswünsche an einen oder mehrere Empfänger richten. Mittels dem an den RTS Block angrenzenden CTS Block signalisieren die Empfänger mittels CTS bzw. nCTS Datenpaketen an den jeweiligen Sender, ob sie eine Information empfangen können, ob der jeweilige Sender den Empfang von anderen Sendern stört und wieviel Informationen sie empfangen können.

Die RTS Datenpakte, welche vom Sender übertragen werden, beinhalten bevorzugt die Größe der Information, die der Sender an einen Empfänger senden möchte bzw. die der Sender beim jeweiligen Empfänger reservieren möchte. Die RTS Datenpakte können aber auch die Anzahl der Zeitschlitze beinhalten die im Empfänger innerhalb eines Datenrahmens reserviert werden sollen, wobei mehrere Zeitschlitze innerhalb eines Zeitrahmens als auch mehrere Zeitschlitze in mehr als einem Datenrahmen für eine Reservierung angefragt werden können.

Die Empfänger der RTS Datenpakete signalisieren dem jeweiligen Sender mittels CTS Datenpaketen, welche Zeitschlitze innerhalb eines Datenrahmens oder auch welche Zeitschlitze innerhalb mehrerer Datenrahmen für den Empfang reserviert werden können. Das erfindungsgemäße MAC Schema auf TDMA Basis erlaubt also, durch einen RTS/CTS Handschlag, also dem Senden eines RTS Datenpakets und dem Empfangen eines CTS Datenpakets als Antwort auf das gesendete RTS Datenpaket, dass mehrere Zeitschlitze innerhalb eines Datenrahmens gleichzeitig reserviert werden können, oder auch dass mehrere Zeitschlitze innerhalb mehrerer Datenrahmen gleichzeitig reserviert werden können. In Fig. 2 sind beispielhaft dynamisch allokierte Zeitschlitze innerhalb eines Frames (20) dargestellt.

CTS Datenpakete die signalisieren, dass keine Reservierung möglich ist, werden auch als not Clear To Send bzw. nCTS Datenpakte bezeichnet (zu Deutsch: nicht bereit zum Senden).

Basierend auf den Rückmeldungen, also den CTS bzw. nCTS Datenpakten aller anderen Empfänger, wählt der Sender dann jene Zeitschlitze aus, in denen er an einen bestimmten Empfänger sendet. Der Sender kann also auch Daten an Empfänger übertragen, die auf eine Reservierungsanfrage mit einem nCTS Datenpaket geantwortet haben. Dies geschieht beispielsweise dann, wenn die zu übertragenen Daten mit Quality-of-Service Informationen (zu Deutsch: Dienstgüte Informationen), gekennzeichnet sind. Generell können sowohl Sender als auch Empfänger Quality-of-Service Datenpakete, die mit RTS und CTS Datenpaketen mitübertragen werden, erkennen und entsprechend höher priorisierte Daten bevorzugen.

Dadurch, dass letztlich der Sender auswählt, in welchen Zeitschlitzen er Nutzdaten an einen Empfänger sendet, kann es vorkommen, dass ein Empfänger Zeitschlitze reserviert hat, die dann aber nicht verwendet werden. Diese stehen somit für den Empfang anderer Sender nicht zur Verfügung. Zur Minimierung dieser Reduktion der Übertragungskapazität kann jeder Sender zu Beginn der Übertragung signalisieren, in welchen Zeitschlitzen er an einen Empfänger sendet. Dies erlaubt jedem Empfänger, nicht verwendete Zeitschlitze für eine nachfolgende Reservierung wieder zu verwenden.

Es ist aber möglich, dass ein Sender prinzipiell mehr Kapazität reklamiert, als er wirklich benötigt. Dadurch werden bei den Empfängern viel mehr Zeitschlitze reserviert, als dann tatsächlich durch den Sender belegt werden. Es ist daher denkbar, sogenannte lernende Empfänger, auch Kognitive Receiver genannt, vorzusehen, die in der Lage sind, ein solches Verhalten der einzelnen Sender zu lernen und gegebenenfalls auch weniger Zeitschlitze zuzuordnen als angefordert wurden. Durch solche kognitiven Empfänger kann die Übertragungskapazität zusätzlich erhöht werden.

Da während des Reservierungsprozesses mittels RTS/CTS Datenpaketen keine Nutzdaten übertragen werden, wird, um einen Overhead (zu Deutsch: Überhang) zu vermeiden, ein RTS/CTS Zyklus nur in größeren Abständen durchgeführt. Die RTS/CTS Blöcke bzw. RTS/CTS Phasen können auch mehrmals innerhalb eines Datenrahmens vorhanden sein.

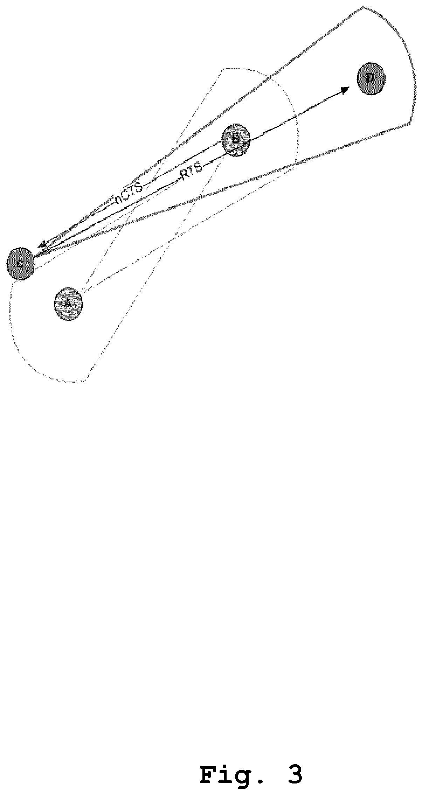

Fig. 3 zeigt, wie basierend auf dem TDMA Schema aus Fig. 2 eine Störung einer Übertragung zwischen zwei Netzwerkknoten A und B durch einen dritten Netzwerkknoten C verhindert wird. Da gemäß dem erfindungsgemäßen Schema aus Fig. 2 alle RTS Zeitschlitze nacheinander angeordnet sind, kann jeder Netzwerkknoten ermitteln, ob eventuelle Aussendungen anderer Netzwerkknoten seinen Empfang stören.

Gemäß Fig. 3 empfängt Netzwerkknoten B Daten von Netzwerkknoten A. Gleichzeitig versucht ein Netzwerkknoten C mit einem Netzwerkknoten D mittels dem Senden eines RTS Datenpakets eine Übertragung zu starten. Eine solche Übertragung würde aber den Empfang des Netzwerkknotens B stören. Eine solche Störung kann auftreten, wenn sich ein empfangender Netzwerkknoten, kurz Empfänger genannt in einer laufenden Übertragung befindet und ein anderer sendender Netzwerkknoten, kurz Sender genannt, zu ihm oder auch zu einem anderen Empfänger Daten übertragen möchte und der Empfänger diesen Sender in der Hauptkeule empfängt. Der betroffenen Empfänger antwortet in diesem Fall mit einem nCTS Datenpaket und signalisiert so dem potentiellen Sender, dass eine Datenübertragung derzeit nicht möglich ist und verhindert so eine Störung seines Empfangs.

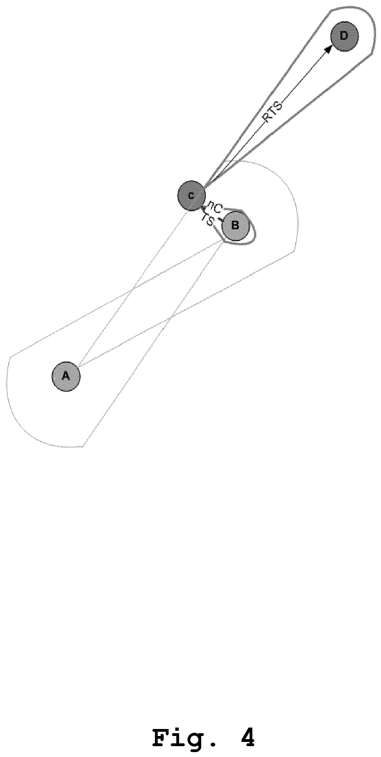

Fig. 4 zeigt eine möglich Störung eines Empfängers B, der von einem Sender A Daten empfängt und durch eine Nebenkeulenaussendung von einem Sender C gestört werden könnte. Das Senden eines nCTS Signals durch den Empfänger B an den potentiellen Sender C verhindert die Störung des Empfangs bei Empfänger B. Der Empfang des Netzwerkknotens B kann also auch über Nebenkeulenempfang gestört werden, was ebenfalls durch Senden eines nCTS Signals des Netzwerkknotens B an den potentiellen Sender C verhindert werden kann. Es ist auch denkbar, dass ein von einer Störung durch eine Nebenkeulenaussendung betroffener Empfänger eine räumliche Nullstelle generiert und dann mit CTS Datenpaketen, welche an den potentiellen Sender C gesendet werden, signalisiert, dass keine Störung auftritt und somit Sender C, eine Verbindung mit D aufbauen kann. Die Erfindung ist nicht auf die in der Beschreibung offenbarten Ausführungsformen beschränkt.

## Patentansprüche

1. Verfahren zum Betreiben eines Kommunikationsnetzwerkes (10) aus mindestens zwei Netzwerkknoten (1, 2) mit je einer Sende/Empfangs Antenne mit folgenden Verfahrensschritten:
- Erzeugung eines Datenrahmens (20), in dem Datenpakete definiert sind, zur Kommunikation mit zumindest einem weiteren Netzwerkknoten (1, 2),
wobei dem Datenrahmen (20) zumindest ein Block, der jedem Netzwerkknoten (1, 2) mindestens einen festen Zeitschlitz zuordnet, zugewiesen wird, und
wobei dem Datenrahmen
- ein Request To Send (RTS) Block zugewiesen wird, der jedem Netzwerkknoten Zeitschlitze für Reservierungswünsche zuordnet, und
- ein Clear To Send (CTS) Block zugewiesen wird, der empfangene Reservierungswünsche mittels einem Clear To Send (CTS) Datenpaket bestätigt oder mittels einem not Clear To Send (nCTS) Datenpaket ablehnt, und
wobei mindestens ein Netzwerkknoten (1,2) Datenpakete an einen gewünschten Empfänger sendet, auch wenn der betreffende Netzwerkknoten ein nCTS Datenpaket erhalten hat,
wobei die zu sendenden Daten eine hohe Priorität haben und die entsprechenden Datenpakete daher mit Quality-of-Service Informationen gekennzeichnet sind.

2. Verfahren nach Anspruch 1,
wobei von einem Netzwerkknoten (1, 2) RTS Datenpakete erzeugt werden, die die Anzahl der benötigten Zeitschlitze und/oder die Größe der auszutauschenden Informationen beinhalten und an zumindest einen adressierten Netzwerkknoten (1, 2) geschickt werden,
dass der adressierte Netzwerkknoten (1, 2) ein CTS oder nCTS Datenpaket erzeugt und an den Netzwerkknoten (1, 2) zurücksendet, und dass,
der eine Netzwerkknoten (1, 2) basierend auf den empfangenen CTS Datenpaketen Nutzdaten sendet oder nicht.

3. Verfahren nach Anspruch 1 oder 2,
wobei ein adressierter Netzwerkknoten (1), der bereits mit einem anderen Netzwerkknoten (2) kommuniziert, einen angefragten Reservierungswunsch mittels einem nCTS Datenpaket ablehnt, und/oder
dass ein Netzwerkknoten anhand der Rückmeldungen aller Netzwerkknoten entscheidet, ob er an einen bestimmten Netzwerkknoten senden kann ohne andere Netzwerkknoten zu stören.

## Claims

1. Method for operating a communication network (10) consisting of at least two network nodes (1, 2) having one transmission/reception antenna each, the method comprising the following method steps:
- generating a data frame (20), in which data packets are defined, for communicating with at least one other network node (1, 2),
wherein the data frame (20) is assigned at least one block which allocates at least one fixed time slot to each network node (1, 2), and
wherein the data frame
- is assigned a Request To Send (RTS) block which allocates time slots for reservation requests to each network node, and
- is assigned a Clear To Send (CTS) block which confirms received reservation requests by means of a Clear To Send (CTS) data packet or rejects them by means of a not Clear To Send (nCTS) data packet, and
wherein at least one network node (1, 2) sends data packets to a desired receiver even when said network node has received an nCTS data packet,
wherein the data to be sent have a high priority and the relevant data packets are therefore tagged with Quality of Service information.

2. Method according to Claim 1,
wherein RTS data packets which contain the number of required time slots and/or the size of the information to be exchanged are generated by one network node (1, 2) and are sent to at least one addressed network node (1, 2),
in that the addressed network node (1, 2) generates a CTS or nCTS data packet and returns this to the network node (1, 2), and in that,
based on the received CTS data packets, the one network node (1, 2) does or does not send useful data.

3. Method according to Claim 1 or 2,
wherein an addressed network node (1) that is already communicating with another network node (2) rejects a requested reservation request by means of an nCTS data packet, and/or
in that, based on the responses from all the network nodes, a network node decides whether it can send to one particular network node without disturbing other network nodes.

## Revendications

1. Procédé pour faire fonctionner un réseau de communication (10) constitué d'au moins deux nœuds de réseau (1, 2) pourvus chacun d'une antenne d'émission/de réception avec les étapes de procédé suivantes :
- la génération d'une trame de données (20), dans laquelle des paquets de données sont définis, pour la communication avec au moins un autre nœud de réseau (1, 2),
dans lequel au moins un bloc, qui attribue au moins un créneau temporel fixe à chaque nœud de réseau (1, 2), est affecté à la trame de données (20), et
dans lequel
- un bloc demande pour émettre (RTS), qui affecte des créneaux temporels à chaque nœud de réseau pour des souhaits de réservation, est associé à la trame de données, et
- un bloc prêt à émettre (CTS), qui confirme les souhaits de réservation reçus au moyen d'un paquet de données prêt à émettre (CTS) ou les rejette au moyen d'un paquet de données non prêt à émettre (nCTS), est affecté à la trame de données et
dans lequel au moins un nœud de réseau (1, 2) envoie des paquets de données à un récepteur souhaité, même si le nœud de réseau concerné a obtenu un paquet de données nCTS,
dans lequel les données à émettre présentent une priorité élevée et les paquets de données correspondants sont pour cette raison caractérisés avec des informations de qualité de service.

2. Procédé selon la revendication 1,
dans lequel des paquets de données RTS sont générés par un nœud de réseau (1, 2), qui comportent le nombre des créneaux temporels nécessaires et/ou la taille des informations à échanger et sont envoyés à au moins un nœud de réseau (1, 2) doté d'une adresse,
en ce que le nœud de réseau (1, 2) doté d'une adresse génère un paquet de données CTS ou nCTS et le renvoie aux nœuds de réseau (1, 2), et en ce que,
l'un des nœuds de réseau (1, 2) envoie ou non des données utiles sur la base des paquets de données CTS reçus.

3. Procédé selon la revendication 1 ou 2,
dans lequel un nœud de réseau (1) doté d'une adresse, qui communique déjà avec un autre nœud de réseau (2), rejette un souhait de réservation demandé au moyen d'un paquet de données nCTS, et/ou
en ce qu'un nœud de réseau décide sur la base des retours de tous les nœuds de réseau s'il peut émettre à un nœud de réseau défini sans perturber d'autres nœuds de réseau.
